Europäisches Patentamt

(19) European Patent Office

Office européen des brevets

(11) Veröffentlichungsnummer: **0 018 436**
A1

(12) **EUROPÄISCHE PATENTANMELDUNG**

(21) Anmeldenummer: **79104193.2**

(22) Anmeldetag: **29.10.79**

(51) Int. Cl.³: **B 60 R 9/04**

(30) Priorität: **10.11.78 DE 2848765**

(43) Veröffentlichungstag der Anmeldung:
**12.11.80 Patentblatt 80/23**

(84) Benannte Vertragsstaaten:
**AT BE CH FR GB IT NL SE**

(71) Anmelder: **Lehner, Wilhelm
Sinbronnerstrasse 36
D-8500 Nürnberg(DE)**

(72) Erfinder: **Lehner, Wilhelm
Sinbronnerstrasse 36
D-8500 Nürnberg(DE)**

(54) **Vorrichtung zur Halterung von Gegenständen an der Karosserie eines Kraftfahrzeuges.**

(57) Die Erfindung bezieht sich auf eine Vorrichtung zur Halterung von Gegenständen an der Karosserie eines Kraftfahrzeuges. Sie besteht zumindest aus einer Dauermagnetplatte (3), mit der ein ärodynamisch geformtes Gehäuse (4) für die Gegenstände (5) derart dicht an der Karosserieoberfläche verbunden ist, daß im Fahrbetrieb zumindest im Frontbereich der Dauermagnetplatte (3) ein zusätzlicher Anpreßdruck vorhanden ist.

Die Verwendung der erfindungsgemäßen Vorrichtung ist in erster Linie für Skier bzw. Surfbretter vorgesehen.

FIG 1

EP 0 018 436 A1

Wilhelm Lehner            Mein Zeichen
Nürnberg                1/78  EUR

**Vorrichtung zur Halterung von Gegenständen an der
Karosserie eines Kraftfahrzeuges**

Die Erfindung bezieht sich auf eine Vorrichtung zur Halterung von Gegenständen an der Karosserie eines Kraftfahrzeuges mittels flexibler Dauermagnetplatten.

Bei einer bekannten Vorrichtung der obengenannten Art (DE-AS 1 630 487) sind die flexiblen Dauermagnetplatten an ihrer Haftfläche als Fläche mit zusätzlicher pneumatischer Adhäsions- oder Saugwirkung ausgebildet. Hierdurch ergeben sich Saugnäpfe, so daß die flächenhafte Auflage der Dauermagnetplatten relativ gering ist. Die zusätzliche Saugwirkung kann jedoch gerade im Betrieb bei Kraftfahrzeugen nicht mit Sicherheit garantiert werden; denn die Auflage der Saugnäpfe muß auf der gesamten Umfangsfläche dicht sein, was infolge von Schmutzpartikeln an der Kraftfahrzeugoberfläche nicht mit Sicherheit garantiert werden kann. Zum anderen ist eine Alterung des elastischen Materials zur Bildung der Saugnäpfe nicht auszuschließen, so daß auch aus diesem Grunde die zusätzliche Saugwirkung auch über längere

25.10.1978

Zeit nicht gewährleistet werden kann. Darüber hinaus ist es notwendig, um die Saugwirkung zu erzielen, eine Relativbewegung der elastischen Dauermagnetplatten gegenüber der Fahrzeugkarosserie zuzulassen, so daß eine Beschädigung der Oberfläche der Kraftfahrzeugkarosserie, insbesondere bei Vorhandensein von Schmutzpartikeln, nicht zu vermeiden ist. Auch hierdurch ist nicht auszuschließen, daß ein Nachlassen der Saugwirkung beim Betrieb der Vorrichtung auftritt. Da die bekannte Vorrichtung, beispielsweise bei der Halterung von Skiern, lediglich an einzelnen Punkten der Karosserie vorgesehen werden kann, ist ein Abheben der Gegenstände bzw. Skier beim Betrieb des Fahrzeuges durch den Fahrtwind nicht auszuschließen.

Es sind ferner sogenannte Flächenmagnete bekannt (DE-AS 1 630 487), die aus einem pulverisierten Magnetwerkstoff bestehen,der in flexible Gummi- oder Kunststoffmassen, die die Form von Platten aufweisen, eingebettet ist. Derartige Flächenmagnete werden im allgemeinen dazu verwendet, um Schilder, wie beispielsweise Probenummern, Fahrschulschilder, Reklame- und Werbeschilder oder dergleichen an der Karosserie von Kraftfahrzeugen zu befestigen. Die mit derartigen Flächenmagneten erreichbare Haltekraft ist größeren Ansprüchen nicht gewachsen.

Durch die Erfindung soll eine Vorrichtung geschaffen werden, mit der auf einfache Weise eine sichere Halterung von Gegenständen, insbesondere auf dem Dach der Karosserie von Fahrzeugen möglich ist, ohne hierbei einen übermäßig großen Aufwand an Material oder bei der Montage treiben zu müssen.

Dies wird auf einfache Weise bei einer Vorrichtung der obengenannten Art dadurch erreicht, daß mit zumindest einer Dauermagnetplatte ein ärodynamisch geformtes Gehäuse für die Gegenstände derart dicht an der Karosserieoberfläche verbunden ist, daß im Fahrbetrieb zumindest im Frontbereich der Dauermagnetplatte ein zusätzlicher Anpreßdruck vorhanden ist. Hierdurch ist es möglich, mit einer relativ geringen Dauermagnethaftkraft für die Vorrichtung auszukommen. Darüber hinaus ist eine erhebliche Kraftstoffersparnis und eine erhöhte Verkehrssicherheit, die sich insbesondere in einer geringen Seitenwindempfindlichkeit zeigt, beim Betrieb des Kraftfahrzeuges zu verzeichnen. Weiterhin werden die Fahrgeräusche gegenüber bekannten Anordnungen wesentlich vermindert. Eine mechanische Beanspruchung der Dauermagnetplatte durch den Fahrtwind, die sich in Form einer Abhebekraft zeigen könnte, kann vermieden werden, wenn das in Fahrtrichtung vordere Ende der Dauermagnetplatte im Strömungsschatten von vorstehenden Karosserieteilen liegt. Hierbei ist es besonders vorteilhaft, wenn die Dauermagnetplatte auf dem Karosseriedach aufgelegt ist und das vorstehende Karosserieteil der Rahmen bzw. die Rahmenabdichtung der Frontscheibe ist. Um insbesondere bei Montage der Vorrichtung auf dem Dach der Karosserie des Fahrzeuges die unterschiedlich geformten Dächer verschiedener Autotypen berücksichtigen zu können, ist es vorteilhaft, wenn das Gehäuse mit der Dauermagnetplatte über Schraubverbindung verbunden ist. Hierdurch läßt sich ohne weiteres ein Ausgleich herstellen, wobei für verschiedene Fahrzeugtypen gewisse Abstandshülsen vorgesehen werden können. Um bei erheblichem Abstand von Gehäuse zur Dauermagnetplatte an der Frontseite die erfindungsgemäße Wirkung nicht zu vermindern, wird an der in Fahrtrichtung vorn liegenden Seite der Vorrichtung zwischen Gehäuse und Dauermagnetplatte ein Fahrtwind abweisender Abstandsfüller vorgesehen. Dieser Abstandsfüller kann beispielsweise aus Schaumstoff mit entsprechend geglätteter Oberfläche bestehen. Um bei Nichtbenutzung des Gehäuses zum Transport von Gegenständen mit dem Kraftfahrzeug eine raumsparende Unterbringung der Vorrichtung zu erreichen ist es vorteilhaft, wenn das Gehäuse ein flexibles, sackförmiges Gebilde zur Aufnahme der Gegenstände ist. Insbesondere zur Aufbewahrung von Skiern ist die erfindungsgemäße Vorrichtung auch außerhalb der Verwendung zur Halterung an der Karosserie eines Kraftfahrzeuges mit Vorteil anzuwenden. Die Vorrichtung wird hierzu beispielsweise an der Innenseite einer metallenen Garagentür befestigt. Hierzu ist es vorteilhaft, wenn das Gehäuse zur Aufnahme von zwei flach nebeneinanderliegenden Skiern ausgebildet ist, als sogenannter Skisack. Die flach nebeneinanderliegenden Skier haben zum anderen den Vorteil, daß die Aufbauhöhe bei Anordnung der Vorrichtung auf dem Kraftfahrzeugdach relativ gering ist. Um auf einfache Weise die ärodynamische Form des Gehäuses zu dem erfindungsgemäßen Zweck zu erreichen ist es vorteilhaft, wenn das Gehäuse geneigte Stirnseiten hat, wobei die in Fahrtrichtung vorn liegende Stirnseite um die Unterkante nach hinten und die hinten liegende Stirnseite um die Oberkante nach vorn geneigt ist. Eine gute Anpassung der Magnetplatte an eine quer zur Fahrtrichtung verlaufende Neigung des Daches der Fahrzeugkarosserie kann erzielt werden, wenn die Magnetplatte an der Auflagefläche aus dem Abstand zueinander in Fahrtrichtung verlaufenden Streifenmagneten besteht. Diese Ausbildung hat zum anderen den Vorteil, daß bei feuchtem Dach ein Gleiten der Magnetplatte auf dem Dach verhindert wird und darüber hinaus ist ein Anfrieren der Magnetplatte im Winter am Dach der Karosserie zu vermeiden. Hierdurch wird u.a. auch die Haftung der Magnetplatte am Dach der Karosserie verbessert. Der Aufwand zur Herstellung einer derartigen Magnetplatte wird relativ gering gehalten, wenn die Streifenmagnete aus handelsüblichen Türdichtungsmagneten bestehen, wie sie beispielsweise zur Abdichtung von Kühlschränken oder Gefriergeräten in Großserien hergestellt werden. Da die erfindungsgemäße Vorrichtung über ein
magnetisches Feld mit der Karosserie verbunden ist,
kann zusätzlich auf einfache Weise eine Diebstahlsicherung der Vorrichtung erreicht werden, nämlich dadurch, daß ein das Streufeld der Dauermagnetplatten
erfassender Sensor im Fahrzeuginneren den Dauermagnetplatten zugeordnet vorgesehen ist, wobei der Sensor mit
einer Alarmeinrichtung in Wirkverbindung steht.

Anhand der Zeichnung wird ein Ausführungsbeispiel gemäß
der Erfindung beschrieben.


Es zeigen

Fig. 1 das Dach der Karosserie eines Kraftfahrzeuges
       mit aufgesetzter, erfindungsgemäßer Vorrichtung,
Fig. 2 eine Vorderansicht auf die erfindungsgemäße
       Vorrichtung,
Fig. 3 die Anordnung der erfindungsgemäßen Vorrichtung
       auf einem Fahrzeug mit stark geneigtem Karosseriedach, wobei zusätzlich die Anordnung einer
       Alarmeinrichtung angedeutet ist.


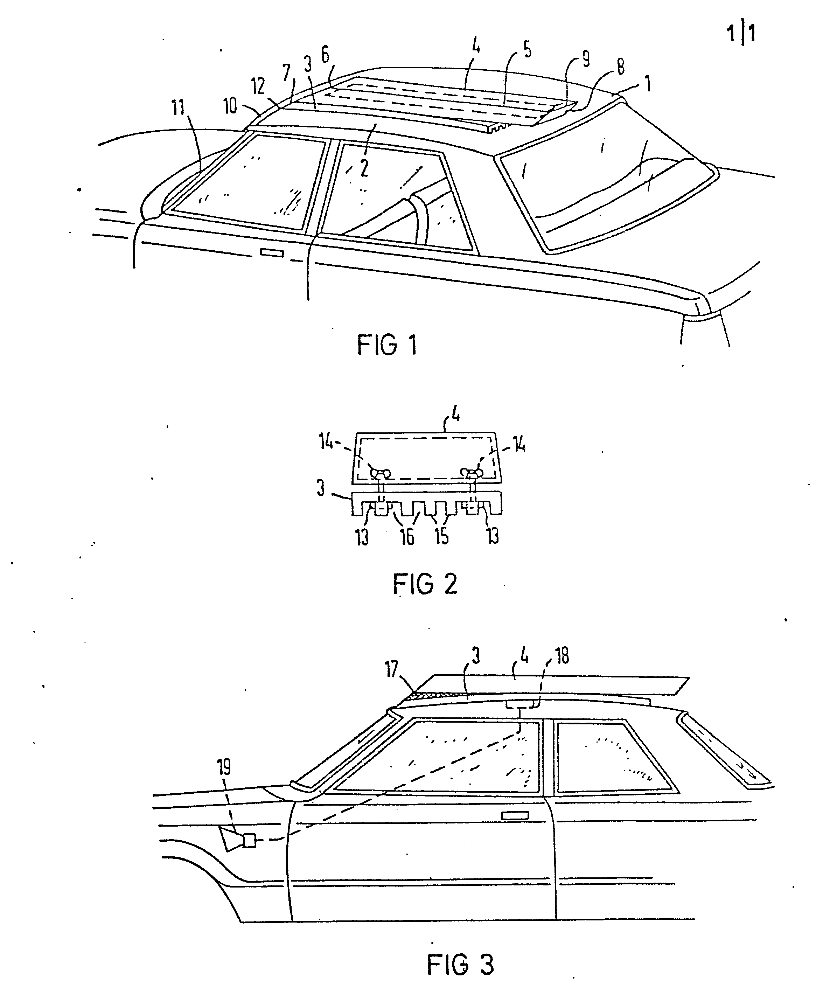

Die in der Zeichnung dargestellte, auf dem Dach 1 der
Karosserie 2 des Fahrzeuges angeordnete, erfindungsgemäße Vorrichtung besteht aus der Dauermagnetplatte 3
und dem mit dieser verbundenen Gehäuse 4. Das Gehäuse 4
dient im bezeichneten Ausführungsbeispiel zur Aufnahme
von Skiern 5, von denen einer in Fig. 1 gestrichelt
angedeutet dargestellt ist. Die Skier liegen in dem
Gehäuse 4 nebeneinander, so daß sich eine geringe Höhe
für das Gehäuse 4 ergibt. Das Gehäuse 4 kann als flexibles,
sackförmiges Gebilde in ähnlicher Form wie sie als Skisäcke bekannt sind, ausgebildet sein. Zur Erzielung der
ärodynamischen Form ist die Stirnseite 6, die in Fahrtrichtung vorn liegt, um die Unterkante 7 nach hinten
geneigt, so daß das Gehäuse auf das Fahrzeugdach 1 beim

Betrieb des Fahrzeuges gedrückt wird. Zur Vermeidung von Abreißwirbeln ist die in Fahrtrichtung hinten liegende Stirnseite 8 um die obere Kante 9 nach vorn geneigt. Die Dauermagnetplatte 3 ist derart auf dem Dach 1 der Karosserie 2 angeordnet, daß sie im Windschatten des Rahmens 10 der Frontscheibe 11 liegt, d.h. der Fahrtwind kann nicht an der vorderen Stirnwand 12 der Dauermagnetplatte 3 angreifen. Die Verbindung zwischen Gehäuse 4 und der Dauermagnetplatte 3 ist in Fig. 2 schematisch dargestellt. Sie erfolgt beispielsweise über Schrauben 13, auf die im Inneren des Gehäuses 4 vorzugsweise Flügelmuttern 14 aufgedreht sind. Die Schrauben 13 können sowohl in der Dauermagnetplatte 3 als auch im Gehäuse 4 in Langlöchern geführt werden, um bei unterschiedlichen Dachneigungen einen Ausgleich schaffen zu können. Zur sicheren Halterung der Skier imm Inneren des Gehäuses kann auf dem Boden des Gehäuses vorteilhafterweise eine nicht näher dargestellte Schaumstoffplatte eingelegt werden, durch die beispielsweise die Flügelmuttern abgedeckt werden. In Fig. 2 übertrieben dargestellt ist die Ausbildung der Dauermagnetplatte mittels in Fahrtrichtung verlaufender Streifenmagnete 15. Die Anzahl der Streifenmagnete 15 kann je nach benötigter Breite variiert werden. Wichtig ist die Bildung von Zwischenräumen 16, die der Aufnahme von Wasser beim Ansetzen der Vorrichtung auf ein feuchtes Autodach bzw. zur Anpassung an ein quer gewölbtes Autodach dienen.

In Fig. 3 ist ein den Fahrtwind abweisender Abstandsfüller 17 dargestellt, der an der Frontseite zwischen Gehäuse 4 und Dauermagnetplatte 3 eingefügt ist. Hierdurch wird ein Eingreifen des Fahrtwindes zwischen Gehäuseboden und Dauermagnetplatte 3 und damit ein Auftrieb für das Gehäuse 4 vermieden. Ein derartiger Abstandsfüller ist jedoch lediglich bei Fahrzeugtypen erforderlich, die ein stark gewölbtes Autodach besitzen. Diese Abstandsfüller können dem Verbraucher sowie auch nicht dargestellte Abstandshülsen, die den Abstand zwischen Dauermagnetplatte 3 und Gehäuse 4 bestimmen und auf die Schrauben 13 aufgeschoben werden, entsprechend dem Autotyp zur Verfügung gestellt werden.

Die Fig. 3 zeigt weiterhin eine Möglichkeit für eine Diebstahlsicherung für die erfindungsgemäße Vorrichtung. Hierzu ist ein Sensor 18 im Inneren des Fahrzeuges angeordnet. Dieser Sensor 18 erfaßt das Streufeld der Dauermagnetplatte 3 im Fahrzeuginneren, so daß nach Entfernen der Dauermagnetplatte 3 der Sensor einen Schaltbefehl abgibt und beispielsweise die Hupe 19 des Fahrzeuges in Betrieb setzt.

Durch die Erfindung ist somit eine Vorrichtung geschaffen, die bei einfachem Aufbau auf sehr einfache Weise am Fahrzeug befestigt werden kann, nämlich lediglich durch Auflegen. Zur Demontage ist lediglich ein Abnehmen der Dauermagnetplatte erforderlich, und da es sich hier um flexible Teile handelt, kann beispielsweise die Dauermagnetplatte samt Gehäuse aufgerollt im Kofferraum des Fahrzeuges verstaut werden. Die erfindungsgemäße Vorrichtung bietet sich daher insbesondere als Ersatz für herkömmliche sperrige Skihalter an und da die erfindungsgemäße Vorrichtung gleichzeitig als Schutzsack für die Skier verwendbar ist, ergibt sich gegenüber herkömmlichen Skihaltern mit zusätzlichem Skischutzsack ein erheblicher Kostenvorteil.

11 Patentansprüche
3 Figuren

Patentansprüche

1. Vorrichtung zur Halterung von Gegenständen an der Karosserie eines Kraftfahrzeuges mittels flexibler Dauermagnetplatten, d a d u r c h   g e k e n n - z e i c h n e t ,   daß mit zumindest einer Dauermagnetplatte (3) ein ärodynamisch geformtes Gehäuse (4) für die Gegenstände (5) derart dicht an der Karosserieoberfläche verbunden ist, daß im Fahrbetrieb zumindest im Frontbereich der Dauermagnetplatte (3) ein zusätzlicher Anpreßdruck vorhanden ist.

2. Vorrichtung nach Anspruch 1, d a d u r c h g e k e n n z e i c h n e t ,   daß das in Fahrtrich- tung vordere Ende der Dauermagnetplatte (3) im Strömungsschatten von vorstehenden Karosserieteilen (10) liegt.

3. Vorrichtung nach Anspruch 2, d a d u r c h g e k e n n z e i c h n e t ,   daß die Dauermagnet- platte (3) auf dem Karosseriedach aufgelegt ist und das vorstehende Karosserieteil der Rahmen (10) bzw. die Rahmenabdichtung der Frontscheibe (11) ist.

4. Vorrichtung nach Anspruch 1, 2 oder 3, d a d u r c h g e k e n n z e i c h n e t ,   daß das Gehäuse (4) mit der Dauermagnetplatte (3) über Schraubverbindung (13, 14) verbunden ist.

5. Vorrichtung nach Anspruch 4, d a d u r c h g e k e n n z e i c h n e t ,   daß an der in Fahrtrichtung vorn liegenden Seite der Halterung zwischen Gehäuse (4) und Dauermagnetplatte (3) ein Fahrtwind abweisender Abstandsfüller (17) vorgesehen ist.

6. Vorrichtung nach einem oder mehreren der vorhergehenden Ansprüche, d a d u r c h   g e k e n n -z e i c h n e t ,   daß das Gehäuse (4) ein flexibles, sackförmiges Gebilde zur Aufnahme von langgestreckten Teilen wie Skiern (5) ist.

7. Vorrichtung nach Anspruch 6, d a d u r c h g e k e n n z e i c h n e t ,   daß das Gehäuse (4) zur Aufnahme von zwei flach nebeneinander liegenden Skiern (5) ausgebildet ist.

8. Vorrichtung nach einem oder mehreren der vorhergehenden Ansprüche, d a d u r c h   g e k e n n -z e i c h n e t ,   daß das Gehäuse (4) geneigte Stirnseiten (6, 8) hat, wobei die in Fahrtrichtung vorn liegende Stirnseite (6) um die Unterkante (7) nach hinten und die hinten liegende Stirnseite (8) um die Oberkante (9) nach vorn geneigt ist.

9. Vorrichtung nach einem oder mehreren der vorhergehenden Ansprüche, d a d u r c h   g e k e n n -z e i c h n e t ,   daß die Dauermagnetplatte (3) an der Auflagefläche aus im Abstand zueinander in Fahrtrichtung verlaufenden Streifenmagneten (15) besteht.

10. Vorrichtung nach Anspruch 9, d a d u r c h g e k e n n z e i c h n e t ,   daß die Streifenmagnete (15) aus handelsüblichen Türdichtungsmagneten bestehen.

11. Vorrichtung nach einem oder mehreren der vorhergehenden Ansprüche, d a d u r c h   g e k e n n -z e i c h n e t ,   daß ein das Streufeld der Dauermagnetplatten (3) erfassender Sensor (18) im Fahrzeuginneren den Dauermagnetplatten (3) zugeordnet vorgesehen ist, wobei der Sensor (18) mit einer Alarmeinrichtung (19) in Wirkverbindung steht.

FIG 1

FIG 2

FIG 3

0018436

Europäisches
Patentamt

**EUROPÄISCHER RECHERCHENBERICHT**

Nummer der Anmeldung

EP 79 10 4193

| Kategorie | Kennzeichnung des Dokuments mit Angabe, soweit erforderlich, der maßgeblichen Teile | betrifft Anspruch | |
|---|---|---|---|
| | <u>DE - A - 2 423 565</u> (SKITT Srl) <br> ✳ Vollständig ✳ <br><br> -- | 1 | KLASSIFIKATION DER ANMELDUNG (int. Cl.)<br><br>B 60 R 9/04 |
| D | <u>DE - A - 1 630 487</u> (F. FORTEN-<br>BACHER) <br> ✳ Vollständig ✳ <br><br> -- | 1 | |
| | <u>FR - A - 1 466 472</u> (M.A. REBOURS) <br> ✳ Vollständig ✳ <br><br> -- | 1 | |
| | <u>FR - A - 1 147 612</u> (M.R. DUBOIS) <br> ✳ Vollständig ✳ <br><br> -- | 1,6 | RECHERCHIERTE SACHGEBIETE (int. Cl.)<br><br>B 60 R 9/04<br>9/06<br>9/12 |
| | <u>US - A - 4 084 735</u> (N. KAPPAS) <br> ✳ Spalte 5, Zeilen 37,38; Figur 1 ✳ <br><br> -- | 1,7,8 | |
| | <u>FR - A - 2 018 616</u> (E. PALERMO) <br> ✳ Anspruch 1; Figur 1 ✳ <br><br> ---- | 1,7,8 | |

EINSCHLÄGIGE DOKUMENTE

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patent-
   familie, übereinstimmendes
   Dokument

Der vorliegende Recherchenbericht wurde für alle Patentansprüche erstellt.

| Recherchenort | Abschlußdatum der Recherche | Prüfer |
|---|---|---|
| Den Haag | 21-02-1980 | CORMACI |

EPA form 1503.1  06.78